# EUROPÄISCHE PATENTSCHRIFT

(11) **EP 3 569 629 B1**
(45) Veröffentlichungstag und Bekanntmachung des Hinweises auf die Patenterteilung: **06.07.2022**
(21) Anmeldenummer: 18172950.0
(22) Anmeldetag: 17.05.2018
(51) Int. Cl.: C08G 59/50

(54) **SCHNELL HÄRTENDE EPOXYSYSTEME**
FAST CURING EPOXY SYSTEMS
SYSTÈMES ÉPOXYDIQUES À DURCISSEMENT RAPIDE

(43) Veröffentlichungstag der Anmeldung: 20.11.2019
(73) Patentinhaber: Evonik Operations GmbH, 45128 Essen (DE)
(72) Erfinder: SPYROU, Emmanouil, 46514 Schermbeck (DE); FUCHSMANN, Dirk, 45721 Haltern am See (DE); KOHLSTRUK, Britta, 45966 Gladbeck (DE); SANDKÜHLER, Annette, 45770 Marl (DE)
(74) Vertreter: Evonik Patent Association

(56) Entgegenhaltungen:
- EP-A1- 3 162 829
- EP-A1- 3 255 078
- WO-A1-2010/107539
- US-B2- 8 980 979
- US-B2- 9 567 480

## Beschreibung

Epoxidharze, insbesondere solche, die aus Bisphenol A und Epichlorhydrin hergestellt werden, sind bekannte Rohstoffe für die Herstellung von qualitativ hochwertigen Gießharzen, Beschichtungsmassen, Kompositen und Klebstoffen. Mit Polyaminen gehärtete aromatische Epoxidharze besitzen neben guter Chemikalien- und Lösungsmittelbeständigkeit eine gute Haftfestigkeit auf vielen Untergründen.

Zur Beschleunigung der Härtung von Epoxy-Amin-Beschichtungssystemen können Katalysatoren eingesetzt werden (US 3,492,269 A, US 5,470,896 A, GB 1,105,772 A).

EP 0 083 813 A1, EP 2 957 584 A1, US 5,441,000 A, US 5,629,380 A, WO 96/09352 A1 offenbaren die katalysierte Härtung von Epoxyharzen mit verschiedenen Aminen.

Cyclische Amine zeigen Vorteile bei der Epoxyhärtung. US 8,951,619 B2 und US 9,006,385 B2 offenbaren u.a. die katalysatorfreie Härtung von Epoxyharzen mit N-substuierten Piperazinen.

CN 106905816 A, CN 106833261 A, JP H08-113876 A, DE 1 954 701 A1, CA 2 165 585 A1 und US 3,055,901 A offenbaren die katalysatorfreie Härtung von Epoxyharzen mit Aminoethylpiperazin.

EP 0 969 030 A1 offenbart Epoxy/Amin-Beschichtungssysteme, deren Aminkomponente ein aliphatisches Amin ist. Die Zusammensetzungen können einen Katalysator aufweisen. In den Beispielen wird weiterhin als Härter Aminoethylpiperazin eingesetzt.

US 4,775,734 A offenbart die Härtung von Epoxyharzen mit u.a. Aminoethylpiperazin, Bis(aminopropyl)piperazin oder Piperidin unter Verwendung katalytischer Mengen von Tetrafluoroborat- oder Hexafluorophosphat-Salzen verschiedener Amine.

EP 3 255 078 A1 offenbart Epoxidharzzusammensetzungen umfassend mindestens eine Epoxidverbindung, 2-(2,2,6,6-tetramethylpiperidin-4-yl)propan-1,3-diamin, und optional einen Katalysator, bei dem es sich unter anderem um ein anorganisches Salz handeln kann.

WO 2017/074810 A1 offenbart Zusammensetzungen umfassend ein Epoxyharz, ein Polyetheramin und einen weiteren Aminhärter, bei dem es sich unter anderem um ein Imidazol oder Imidazolin handeln kann, sowie einen Metalltriflat-Katalysator.

US 2012/0010330 A1 offenbart die Härtung eines Epoxyharzes mit u.a. einem cyclischen Diamin ausgewählt aus Piperazin oder Homopiperazin in Gegenwart mindestens 10 % eines Alkylphenoles. Die eingesetzten Alkylphenole wirken u.a. reaktionsbeschleunigend, belasten jedoch dabei in den eingesetzten hohen Konzentrationen die Umwelt stark. Die Härtung der offenbarten Zusammensetzungen kann in Gegenwart eines weiteren, optionalen Katalysators erfolgen, bei dem es sich um Calciumnitrat handeln kann.

Den Zusammensetzungen des Standes der Technik ist weiterhin gemein, dass sie zu langsam oder nur bei hohen Temperaturen aushärten.

Für viele Anwendungen ist es jedoch wichtig, dass eine Oberflächenhärtung oder die vollständige Durchhärtung besonders schnell oder aber bei niedrigen Temperaturen abläuft. Ersteres kann die Produktivität erhöhen oder aber den nächsten Verarbeitungsschritt beschleunigen. Letzteres ist vor allem in kalten Gegenden wichtig, um beispielsweise Schiffe oder Pipelines mit einem Korrosionsschutzüberzug zu versehen, so dass dort auch im Winter weitergearbeitet werden kann.

Es stellt sich vorliegend somit die Aufgabe Epoxysysteme bereitzustellen, die unter gleichen Bedingungen deutlich schneller reagieren als die bisher bekannten Formulierungen. Auch stellt sich die Aufgabe, Epoxyformulierungen bereitzustellen, die bei Temperaturen deutlich unterhalb von Raumtemperatur schneller als bislang möglich an- bzw. aushärten. Weiterhin sollen Epoxyformulierungen bereitgestellt werden, die die Umwelt weniger belasten.

Diese sich vorliegend stellenden Aufgaben werden gelöst durch die erfindungsgemäßen maximal 10 Gew.-% Alkylphenol enthaltenden Zusammensetzungen umfassend
a) mindestens ein Epoxyharz,
b) mindestens ein cyclisches Amin mit mindestens zwei sekundären Aminogruppen, die beide Bestandteil eines organischen Ringsystems sind, und
c) mindestens ein Salz einer Brönstedt-Säure mit einem pKs-Wert kleiner oder gleich 2 mit einem Gegenion ausgewählt aus Metallionen, Metall-haltigen Ionen, Phosphoniumionen und Ammoniumionen,
d) Amine, die nicht mindestens zwei sekundäre Aminogruppen als Bestandteil eines organischen Ringsystems aufweisen, allein oder in Mischungen,
mit der Maßgabe, dass der Gewichtsprozentanteil der Amine b) bezogen auf die Gesamtmasse der Amine b) und d) mindestens 10 Gew.-% beträgt.

Die erfindungsgemäßen Zusammensetzungen sind alkylphenolarm, d.h. sie enthalten maximal 10 Gew.-%, bevorzugt maximal 9 Gew.-%, weiter maximal 8 Gew.-%, noch weiter bevorzugt maximal 7 Gew.-%, am meisten bevorzugt maximal 5 Gew.-%, bezogen auf die Massen aller Komponenten, Alkylphenole. Ganz besonders bevorzugt enthalten die phenolarmen Zusammensetzungen keine Alkylphenole. Entsprechende phenolfreie Zusammensetzungen haben weiterhin den Vorteil, wenig toxisch und allergen zu sein.

Bei der **Komponente a)** handelt es sich um mindestens ein Epoxyharz. Prinzipiell sind dafür alle Epoxidverbindungen geeignet.

Geeignete Epoxidverbindungen werden z. B. in EP 675 185 A2 beschrieben. Es kommt eine Vielzahl der bekannten Verbindungen in Betracht, die mehr als eine Epoxidgruppe, vorzugsweise zwei Epoxidgruppen, pro Molekül enthalten. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- oder Reaktionsbedingungen keine störenden Nebenreaktionen verursachen, beispielsweise Alkyl- oder Arylsubstituenten oder Ethergruppierungen.

Bevorzugte Epoxidverbindungen sind dabei Glycidylether, die sich von mehrwertigen Phenolen, insbesondere Bisphenolen sowie Novolaken ableiten und deren Molmassen bezogen auf die Anzahl der Epoxidgruppen ME ("Epoxidäquivalentgewichte", "EV-Wert") zwischen 100 und 1500 g/val, insbesondere jedoch zwischen 150 und 250 g/val, liegen.

Besonders bevorzugte Epoxidverbindungen leiten sich ab von Resorcin, Hydrochinon, 2,2-Bis-(4-hydroxyphenyl)-propan (Bisphenol A), Isomerengemischen des Dihydroxydiphenylmethans (Bisphenol F), 4,4'-Dihydroxydiphenylcyclohexan, 4,4'-Dihydroxy-3,3'-dimethyldiphenylpropan,4,4'-Dihydroxydiphenyl, 4,4'-Dihydroxybenzophenon, Bis-(4-hydroxyphenyl)-1,1-ethan, Bis-(4-hydroxyphenyl)-1,1-isobutan, 2,2-Bis-(4-hydroxy-tert.butylphenyl)-propan, Bis-(2-hydroxynaphthyl)-methan, 1,5-Dihydroxynaphthalin, Tris-(4-hydroxyphenyl)-methan, Bis-(4-hydroxyphenyl)-ether, Bis-(4-hydroxyphenyl)-sulfon, sowie den Chlorierungs- und Bromierungsprodukten der vorstehend genannten Verbindungen (wie beispielsweise TetrabromBisphenol A).

Ganz besonders bevorzugt werden flüssige Diglycidylether auf Basis von Bisphenol A und Bisphenol F mit einem Epoxidäquivalentgewicht von 150 bis 200 g/val eingesetzt.

Bevorzugt können auch Polyglycidylether von Polyalkoholen verwendet werden, wie z. B. Ethandiol-1,2-diglycidylether, Propandiol-1,2-diglycidylether, Propandiol-1,3-diglycidylether, Butandioldiglycidylether, Pentandioldiglycidylether (auch Neopentylglykoldiglycidylether), Hexandioldiglycidylether, Diethylenglykoldiglycidylether, Dipropylenglykoldiglycidylether, höhere Polyoxyalkylenglykoldiglycidylether, wie z. B. höhere Polyoxyethylenglykoldiglycidylether und glykoldiglycidylether, Mischpolyoxyethylen-propylenglykoldiglycidylether, Polyoxytetramethylenglykoldiglycidylether, Polyglycidylether des Glycerins, des 1,2,6-Hexantriols, Trimethylolpropans, Trimethylolethans, Pentaerythrits, Sorbitols, Polyglycidylether von oxalkylierten Polyolen (wie z. B. des Glycerins, Trimethylolpropans, Pentaerythrits u. a.), Diglydicylether des Cyclohexandimethanols, Bis-(4-hydroxycyclohexyl)methans und 2,2-Bis-(4-hydroxy-cyclohexyl)propans, Polyglycidylether des Rizinusöls, Triglycidyltris-(2-hydroxy-äthyl)-isocyanurat. Weiterhin kommen bevorzugt als Komponente A) in Frage: Poly-(N-glycidyl) Verbindungen, die erhältlich sind durch Dehydrohalogenierung der Reaktionsprodukte von Epichlorhydrin und Aminen wie Anilin, n-Butylamin, Bis-(4-aminophenyl)methan, m-Xylylendiamin oder Bis-(4-methylaminophenyl)methan. Zu den Poly-(N-glycidyl)-Verbindungen zählen aber auch Triglycidylisocyanurat, Triglycidylurazol sowie deren Oligomere, N,N'-Diglycidylderivate von Cycloalkylenharnstoffen und Diglycidylderivate von Hydantoinen.

Weiterhin können bevorzugt auch Polyglycidylester von Polycarbonsäuren eingesetzt werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Tetrahydrophthalsäure, Hexahydrophthalsäure, 2,6-Naphthalindicarbonsäure und höhere Dicarbonsäurediglycidylester, wie z. B. dimerisierte bzw. trimerisierte Linolensäure, erhält. Beispiele sind Adipinsäurediglycidylester, Phthalsäurediglycidylester und Hexahydrophthalsäurediglycidylester.

Weiterhin seien bevorzugt genannt Glycidylester ungesättigter Carbonsäuren und epoxidierte Ester von ungesättigten Alkoholen bzw. ungesättigten Carbonsäuren. Zusätzlich zu den Polyglycidylethern können geringe Mengen von Monoepoxiden wie z. B. Methylglycidylether, Butylglycidylether, Allylglycidylether, Äthylhexylglycidylether, langkettige aliphatische Glycidylether, wie z. B. Cetylglycidylether und Stearylglycidylether, Monoglycidylether eines höheren isomeren Alkoholgemisches, Glycidylether einer Mischung von C12 bis C13 Alkoholen, Phenylglycidylether, Kresylglycidylether, p-t-Butylphenylglycidylethers, p-Octylphenylglycidylether, p-Phenylphenylglycidylether, Glycidylether eines oxalkylierten Laurylalkohols sowie Monoepoxide wie beispielsweise epoxidierte einfach ungesättigte Kohlenwasserstoffe (Butylen-, Cyclohexen-, Styroloxid) in Massenanteilen bis zu 30 Gew.-%, vorzugsweise 10 bis 20 Gew.-%, bezogen auf die Masse der Polyglycidylether mitverwendet werden.

Eine ausführliche Aufzählung der geeigneten Epoxyverbindungen findet sich in dem Handbuch "Epoxidverbindungen und Epoxidharze" von A. M. Paquin, Springer Verlag, Berlin 1958, Kapitel IV, und in Lee Neville "Handbook of Epoxy Resins", 1967, Chapter 2.

Als Epoxyverbindungen kommen dabei bevorzugt Glycidylether und Glycidylester, aliphatische Epoxide, Diglycidylether auf Basis Bisphenol A und / oder Bisphenol F und Glycidylmethacrylate in Frage. Beispiele für solche Epoxide sind auch Triglycidylisocyanurat (TGIC, Handelsname ARALDIT 810, Huntsman), Gemische aus Terephthalsäurediglycidylester und Trimelitsäuretriglycidylester (Handelsname ARALDIT PT 910 und 912, Huntsman), Glycidylester der Versaticsäure (Handelsname CARDURA E10, Shell), 3,4-Epoxycyclohexylmethyl-3',4'-epoxycyclohexancarboxylat (ECC), Ethylhexylglycidylether, Butylglycidylether, Pentaerythrittetraglycidylether, (Handelsname POLYPOX R 16, UPPC AG) sowie andere Polypoxtypen mit freien Epoxygruppen.

Es können auch Mischungen der genannten Epoxyverbindungen eingesetzt werden.

Besonders bevorzugte Epoxyharze sind Polyepoxide auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester.

Bevorzugt werden Mischungen der vorgenannten Epoxyverbindungen als Komponente A) eingesetzt.

Als **Amine b)** mit mindestens zwei sekundären Aminogruppen, die beide Bestandteil eines organischen Ringsystems sind, kommen prinzipiell alle Verbindungen in Frage, die mindestens zwei sekundäre cyclische Aminogruppen aufweisen. Darüber hinaus können die Amine b) als NH-Träger noch weitere primäre oder nicht-cyclische sekundäre Aminogruppen aufweisen. Bevorzugt weisen die in den erfindungsgemäßen Zusammensetzungen eingesetzten Aminen jedoch keine weiteren primären oder nicht-cyclischen sekundären Aminogruppen auf, d.h. sie weisen ausschließlich mindestens zwei sekundäre Aminogruppen auf, die Bestandteil eines organischen Ringsystems sind. Darüber hinaus können die erfindungsgemäß eingesetzten Amine jedoch natürlich noch tertiäre Aminogruppen aufweisen, die nicht reaktiv sind.

Unter einem "organischen Ringsystem" ist ein heterocyclisches System zu verstehen, das einen, zwei oder mindestens drei (ggf. mit nicht Stickstoff enthaltenden Heterocyclen oder Nicht-Heterocyclen annellierte) stickstoffhaltige Heterocyclen aufweisen kann. Das organische Ringsystem kann dabei auch in den stickstoffhaltigen Cyclen andere Heteroatome als Stickstoff, insbesondere Sauerstoff, Schwefel und/oder Phosphor, aufweisen. Unter "einem" stickstoffhaltigen Cyclus ist dabei vorliegend ein einfacher stickstoffhaltiger Cyclus oder ein einfacher stickstoffhaltiger Cyclus, der mit einem nichtstickstoffhaltigen Heterocyclus, einem Cycloalkan, einem Cycloalken oder einem aromatischen Kohlenwasserstoff eine Ringbindung teilt (d.h., ein stickstoffhaltiger Cyclus, an den ggf. ein nichtstickstoffhaltiger Heterocyclus, ein Cycloalkan, ein Cycloalken oder ein aromatischer Kohlenwasserstoff annelliert ist), zu verstehen.

Bei den Aminen mit mindestens zwei sekundären Aminogruppen kann es sich auch um auch entsprechende Umsetzungsprodukte von Verbindungen mit sekundären cyclischen Aminogruppen und optional weiteren primären oder nicht-cyclischen sekundären Aminogruppen mit gegenüber NH-Gruppen reaktiven Gruppen, insbesondere Mono- und Polyepoxiden (Addukten), Polyisocyanaten, Polycarbodiimiden, Phenolen (Mannichreaktionen mit Aldehyden und Ketonen), und substituierten Phenolen (Austausch der Mannichbase), Polyestern, Polycarbonsäuren, Polyacrylaten und Polymethacrylaten handeln.

In einer bevorzugten Ausführungsform handelt es sich bei den Aminen b) um Amine, die mindestens zwei sekundäre cyclische Aminogruppen aufweisen, von denen mindestens zwei unterschiedlichen Cyclen angehören. Besonders bevorzugt handelt es sich bei den Aminen b) um Amine, die zwei bis vier sekundäre cyclische Aminogruppen an zwei bis vier unterschiedlichen Cyclen aufweisen. Unter entsprechenden Aminen mit mindestens zwei unterschiedlichen Cyclen sind bevorzugt auch kondensierte Heterocyclen aus mindestens zwei einfachen Heterocyclen zu verstehen.

Ganz besonders bevorzugt gehören die mindestens zwei sekundären cyclischen Aminogruppen demselben Cyclus an.

Noch weiter bevorzugte Amine b) weisen die Formel (I) auf 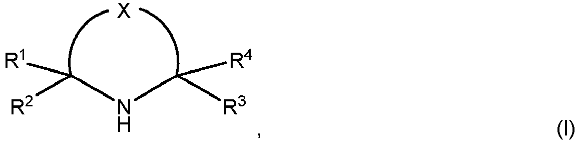 in der
- R¹ bis R⁴ für H oder organischen Rest steht, und
- X = -(Y¹)ₘ-(A¹)ₙ-(Y²)ₒ-(A²)ₚ-(Y³)_{q}-(A³)ᵣ(Y⁴)ₛ, (II) wobei unabhängig voneinander
   ∘ m, n, o, p, q, r und s = 0 oder 1,
   ∘ A¹, A², A³ = Alkylen- oder Alkenylenrest und
   ∘ Y¹, Y², Y³, Y⁴ = NR⁵, PR⁵, O oder S, mit R⁵ unabhängig voneinander = H oder organischer Rest,
   ∘ wobei jeweils zwei organische Reste ausgewählt aus R¹ bis R⁵ und ggf. anwesenden Resten der Alkylen- und/oder Alkenylenreste A¹, A², A³ auch einen oder mehrere weitere Ringe bilden können,
- mit der Maßgabe, dass mindestens einer der vorhandenen Reste ausgewählt aus Y¹, Y², Y³, Y⁴ gleich NR⁵ mit R⁵ = H ist.

Die cyclischen Amine sind in Bezug auf den dargestellten Ring in Formel (I) gesättigt oder zum Teil ungesättigt. Entsprechende Amine reagieren schneller als nicht unter die Formel fallende aromatische Amine und Imidazoline. Optional weitere anwesende Ringe im cyclischen Amin können nicht nur gesättigt oder ungesättigt, sondern auch aromatisch sein. Bevorzugt sind die optional weiteren anwesenden Ringe im cyclischen System nicht-aromatische, d. h. gesättigte oder ungesättigte.

Bevorzugte cyclische Amine sind in Bezug auf den dargestellten Ring in Formel (I) gesättigt.

Bevorzugt ist mindestens einer der der ringständigen Aminogruppe benachbarten Kohlenstoffatome = H, d. h. mindestens einer der Reste R¹, R², R³ und R⁴ = H. Weiter bevorzugt sind mindestens zwei der Reste R¹, R², R³ und R⁴ = H ist. Bevorzugt sind mindestens drei, besonders bevorzugt alle der Reste R¹, R², R³ und R⁴ = H. Entsprechend unsubstituierte Amine reagieren schneller als andere Amine.

Im Rest X sind, wenn vorhanden, A¹, A² und A³ unabhängig voneinander Alkylen- oder Alkenylenreste. Diese können wiederum organische Reste tragen. Weisen die Alkylen- und/oder Alkenylenreste selbst einen oder mehrere organische Reste auf, können jeweils zwei organische Reste ausgewählt aus den organischen Resten der Alkylen- und/oder Alkenylenreste auch miteinander oder mit ggf. vorhandenen organischen Resten R¹ bis R⁵ einen oder mehrere weitere Ringe bilden.

Vorhandene Reste ausgewählt aus R¹ bis R⁵ und ggf. anwesenden Resten der Alkylen- und/oder Alkenylenreste A¹, A², A³ können mit mindestens einer Gruppe -NHR⁶ oder -NH₂ substituiert ist, wobei R⁶ = organischer Rest. Das heißt, auch in Formel (I) können neben den mindestens zwei cyclischen Aminogruppen auch noch weitere primäre oder nicht-cyclische sekundäre Aminogruppen vorhanden sein.

Bevorzugt weisen A¹, A² und A³ jeweils, wenn vorhanden, unabhängig voneinander die Formel (III) auf,

-(CR⁷R⁸)ₓ-(CR⁹=CR¹⁰)_{y}-(CR¹¹R¹²)_{z}- (III)

in der unabhängig von einander
- R⁷, R⁸, R⁹, R¹⁰, R¹¹ und R¹² = H oder organischer Rest und
- 1 ≤ x + y + z ≤ 7
ist.

Die Indices x, y und z können entsprechend Ihrer Zugehörigkeit zum Rest A¹, A² und A³ bevorzugt auch als Indices x¹, y¹ und z¹, als x², y² und z² und als x³, y³ und z³ bezeichnet werden.

Bevorzugt weist X eine Kettenlänge von 2 bis 15 Atomen auf. Bevorzugt beträgt somit die Summe aus allen x, ½·y und z sowie aus m, o, q und s einen Wert zwischen 2 und 15, weiter bevorzugt einen Wert zwischen 2 und 8, noch weiter bevorzugt einen Wert zwischen 2 und 5 und ganz besonders bevorzugt einen Wert zwischen 2 und 4. Anders ausgedrückt, ist bevorzugt 2 ≤ m + o + q + s + x¹ + ½·y¹ + z¹ + x² + ½·y² + z² + x³ + ½·y³ + z³ ≤ 15. Weiter bevorzugt ist 2 ≤ m + o + q + s + x¹ + ½·y¹ + z¹ + x² + ½·y² + z² + x³ + ½·y³ + z³ ≤ 8, weiter bevorzugt 2 ≤ m + o + q + s + x¹ + ½·y¹ + z¹ + x² + ½·y² + z² + x³ + ½·y³ + z³ ≤ 5, ganz besonders bevorzugt 2 ≤ m + o + q + s + x¹ + ½·y¹ + z¹ + x² + ½·y² + z² + x³ + ½·y³ + z³ ≤ 4.

Bei den Aminen der Formel (I) handelt es sich um (ggf. bi-/poly)cyclische Verbindungen, da beide zur Aminogruppe benachbarten Kohlenstoffatome beidseitig an den substituierten (Hetero)Alkylenrest der Formel (II) angebunden sind.

Weiter bevorzugt weist Formel (I) neben dem Stickstoffatom der ringständigen NH-Gruppe maximal ein weiteres Heteroatom im Zyklus auf, d.h. X hat bevorzugt die Formel (IIa)

X = -(CR⁷R⁸)ₓ-(Y)ₒ-(CR¹¹R¹²)_{z}- (IIa)

mit
- x und z = 0, 1, 2, 3, 4, 5, 6 oder 7,
- o = 1,
- 2 ≤ x + o + z ≤ 15
- R⁷, R⁸, R¹¹, R¹² = H oder organischer Rest und
- Y = NH.

Ganz besonders bevorzugt ist in Formel (IIa) x = z = 1.

Entsprechend gilt dann, dass in Formel (I) jeweils zwei organische Reste ausgewählt aus R¹ bis R⁸, R¹¹ und R¹² auch einen oder mehrere weitere Ringe bilden können.

Die Reste R¹, R², R³, R⁴, R⁵, R⁶, R⁷, R⁸, R⁹, R¹⁰, R¹¹ und R¹² können organische Reste sein. Bevorzugte organische Reste sind Alkyl-, Alkenyl-, Alkinyl-, Aryl- oder Aralkylreste. Diese können innerhalb ihrer Kette heteratomsubstituiert sein und/oder Substituenten tragen. Bevorzugte organische Reste sind Alkyl-, Alkenyl-, Alkinyl-, Aryl- oder Aralkylreste, die innerhalb der Kette eine oder mehrere Ether-, Carboxy-, Amino-, Amido-, Harnstoff-, Carbamat-, Carbonat-, Amidino- oder Guanidinogruppen tragen können. Weiterhin können bevorzugte organische Reste einen oder mehrere Substituenten ausgewählt aus organischen Resten, optional mit Ether-, Carboxy-, Amino-, Amido-, Harnstoff-, Carbamat-, Carbonat-, Amidino- oder Guanidinogruppen, die ggf. auch mit Hydroxy-, Nitril- oder Halogenresten substituiert sein oder selbst Hydroxy-, Nitril- oder Halogenreste sein können.

Besonders bevorzugte Amine b) sind ausgewählt aus der Gruppe bestehend aus sind 3,7-Diazabicyclo[4.3.0]nonan, 2,8-Diazabicyclo[4.3.0]nonan, 2-Phenyl-2-imidazolin, 3,8-Diazabicyclo[3.2.1]octan, 2,2'-Bisimidazolidine, 1H- Octahydro-imidazo[4,5-c]pyridin, 1,4,8-Triazaspiro[4.5]decan, 1,4-Diazaspiro[4.5]decan, Pyrazolidin, 2,2-Dimethylimidazolidin, 1,4,7-Triazacyclononan, Decahydro-2,6-dimethylpyrazino[2,3-b]pyrazin, Hexahydropyridazine, Decahydro-4a,8a-dimethylpyrazino[2,3-b]pyrazin, 4,4'-Methylenebis[piperidin], 2,2'-Methylenebis[piperidin], Tetradecahydro-4,7-phenanthrolin, 2,2'-Bipiperidin, 4,4'-Bipiperidin, Tetradecahydrophenazin, Decahydrochinoxalin, 1,5-Decahydronaphthyridin, Octahydro-1H-cyclopentapyrazin, 2,2'-Bipyrrolidin, Piperazin, 2-Methylpiperazin, 2,2-Dimethylpiperazin, 2,3-Dimethylpiperazin, 2-Ethylpiperazin, 2,5-Dimethylpiperazin, 2,6-Dimethylpiperazin, 2,6-Diazabicyclo[3.3.0]octan, 3,7-Diazabicyclo[3.3.0]octan, 2,3,5,6-Tetramethylpiperazin, 2,3,5-Trimethylpiperazin, 2,2'-Bipiperidin, 2-(2-Piperidinyl)-piperazin, 2,2'-Bimorpholin, Decahydro-2,6-naphthyridin, Decahydro-2,7-naphthyridin, Homopiperazin, 2-Methylhomopiperazin, 6-Methyl-1,4-diazepan, Bis[2-(piperazin-1-yl)ethyl]amine und 1,2-Dipiperazinoethane.

Die Verbindungen der Formel (I) können auch in Mischung eingesetzt werden.

Die erfindungsgemäßen Zusammensetzungen enthalten weiterhin mindestens ein **Salz einer starken Brönstedt-Säure** mit einem Gegenion ausgewählt aus Metallionen, Metall-haltigen Ionen, Phosphoniumionen und Ammoniumionen. Entsprechende Salze dienen als Katalysator. Unter einer solchen starken Säure ist vorliegend eine Säure zu verstehen, deren pKs-Wert (bzw. im Falle mehrprotoniger Säuren deren pKs-Wert der ersten Protolysationsstufe) kleiner oder gleich 2 ist. Bevorzugt ist der pKs der korrespondierenden Säure kleiner oder gleich -2. Bevorzugt beträgt der pKs-Wert der starken Säure zwischen 2 und -9,0, besonders bevorzugt zwischen -2 und -9,0.

Der pKs ist definiert als der negative dekadische Logarithmus der Gleichgewichtskonstante Ks und gilt als Maß für die Stärke einer Säure. Je kleiner ein pKs-Wert, desto stärker die Säure. Der pKs-Wert wird bestimmt wie in F.G. Bordwell, "Equilibrium Acidities in Dimethylsulfoxide Solution", Acc. Chem. Res. 1988, 21, 456-463 offenbart.

Bevorzugte Salze sind die entsprechenden Salze der in der folgenden Tabelle 1 in der ersten Spalte zusammengefassten starken Säuren:

**Tabelle 1:**

| | | |
|---|---|---|
| Säure | pKs-Wert | Literaturstelle, falls nicht in Bordwell offenbart |
| Oxalsäure | 1,5 | Bayer Walter, Lehrbuch der organischen Chemie, 21. Auflage, Hirzelverlag 1988, S. 324 |
| p-Toluolsulfonsäure | 0,7 | Römpp Lexikon Chemie, 10. Auflage, Georg Thieme Verlag, Stuttgart, New York, Verlag 1999, S. 4580-1. |
| Trifluoressigsäure | 0,2 | Bayer Walter, Lehrbuch der organischen Chemie, 21. Auflage, Hirzelverlag 1988, S. 272 |
| Tetrafluorborsäure | -0,4 | e-EROS Encyclopedia of Reagents for Organic Synthesis, Pages1-4, Conference; General Review; Online Computer File, 2001 |
| Salpetersäure | -1,4 | Hollemann Wiberg, Lehrbuch der anorganischen Chemie, 91.-100 Auflage, Walter der Gruyter Verlag, Berlin, New York, 1985, S. 603. |
| Schwefelsäure | -3 | Römpp, Lexikon Chemie, 9. Auflage, Georg Thieme Verlag, Stuttgart, New York 1991, S. 3459. |
| Salzsäure | -8 | |
| Bromwasserstoffsäure | -9 | |

Die Gegenionen dieser starken Säuren sind ausgewählt aus Metallionen, Metall-haltigen Ionen, Phosphoniumionen und Ammoniumionen. Bevorzugte Metallionen sind Erdalkalimetallkationen, insbesondere Beryllium-, Magnesium-, Calcium-, Strontium- und Barium-Ionen, sowie Lithium- und Zirkoniumionen.

Metall-haltige Ionen sind Ionen, die mindestens ein Metall enthalten, aber keine reinen Metallionen sind. Bevorzugt handelt es sich um Metallverbindungsionen, wie z. B. Tetraphenylstiboniumionen.

Auch können die Gegenionen Ammoniumionen (NH₄⁺) oder ggf. alkylierte und/oder arylierte Phosphoniumionen sein. Ganz besonders bevorzugt sind Ammoniumionen.

Bevorzugte Salze starker Säuren sind Calciumnitrat, Magnesiumbromid, Zirkonium(IV)chlorid, Indiumchlorid, Bismutchlorid, Kupfertetrafluoroborat, Calciumoxalat, Lithiumbromid und Magnesiumnitrat.

Bevorzugte Salze starker Säuren sind Erdalkalihalogenide, darunter insbesondere Magnesiumbromid.

Bevorzugt sind in organischen Medien (z. B. Benzylalkohol) gut lösliche Salze, d.h. Salze mit einer Löslichkeit von mindestens 10 g/l in Benzylalkohol bei 20 °C. Salze wie Calciumsulfat oder Bariumsulfat sind somit weniger bevorzugt.

Die erfindungsgemäßen Zusammensetzungen weisen weiterhin d) Amine, die nicht mindestens zwei sekundäre Aminogruppen als Bestandteil eines organischen Ringsystems aufweisen, auf. Bevorzugt können sie e) weitere Hilfs- oder Zusatzstoffe aufweisen.

Solche Amine d) sind bevorzugt Di- oder Polyamine. Diese können monomere, oligomere und/oder polymere Verbindungen sein. Bevorzugte monomere und oligomere Verbindungen sind ausgewählt aus der Gruppe bestehend aus Diaminen, Triaminen und Tetraminen. Die Amingruppe der Di- oder Polyamine d) kann an ein primäres, sekundäres oder tertiäres Kohlenstoffatom angebunden sein, bevorzugt an ein primäres oder sekundäres Kohlenstoffatom. Es können auch Mischungen von Di- und/oder Polyaminen als Komponente d) eingesetzt werden.

Als Komponente d) können bevorzugt die folgenden Amine allein oder in Mischungen eingesetzt werden:
- aliphatische Amine, insbesondere Polyalkylenpolyamine, bevorzugt ausgewählt aus 1,2-Ethylendiamin, 1,2-Propylendiamin, 1,3-Propylendiamin, 1,2-Butylendiamin, 1,3-Butylendiamin, 1,4-Butylendiamin, 2-(Ethylamino)ethylamin, 3-(Methylamino)propylamin, Diethylentriamin, Triethylentetramin, Pentaethylenhexamin, Trimethylhexamethylendiamin, 2,2,4-Trimethylhexamethylendiamin, 2,4,4-Trimethylhexamethylendiamin, 2-Methyl-pentandiamin, Hexamethylendiamin, N-(2-Aminoethyl)-1,2-ethandiamin, N-(3-Aminopropyl)-1,3-propandiamin, N,N"-1,2-Ethandiylbis-(1,3-propandiamin), Dipropylentriamin, Adipinsäuredihydrazid und Hydrazin;
- Oxyalkylenpolyamine, bevorzugt ausgewählt aus Polyoxypropylendiamin und Polyoxypropylentriamin (z. B. Jeffamine^{®} D-230, Jeffamine^{®} D-400, Jeffamine^{®} T-403, Jeffamine^{®} T-5000), 1,13-Diamino-4,7,10-trioxatridecan, 4,7-Dioxadecan-1,10-diamin;
- cycloaliphatische Amine, bevorzugt ausgewählt aus Isophorondiamin (3,5,5-Trimethyl-3-aminomethyl-cyclohexylamin), 4,4'-Diaminodicyclohexylmethan, 2,4'-Diaminodicyclohexylmethan und 2,2'-Diaminodicyclohexylmethan allein oder in Mischungen der Isomeren, 3,3'-Dimethyl-4,4'-diamino-dicyclohexylmethan, N-Cyclohexyl-1,3-propandiamin, 1,2-Diaminocyclohexan, 3-(Cyclohexylamino)propylamin, TCD-Diamin (3(4), 8(9)-Bis(aminomethyl)-tricyclo[5.2.1,02,6]decan), 4-Methylcyclohexan-1,3-diamin,
- Amine mit einer cyclischen Aminogruppe und mindestens einer nichtcyclischen primären oder sekundären Aminogruppe, bevorzugt 1-(3-Aminoethyl)piperazin (AEP), 1-(3-Aminopropyl)piperazin;
- araliphatische Amine, bevorzugt Xylylendiamine;
- aromatische Amine, bevorzugt Phenylendiamine, insbesondere 1,3-Phenylendiamin und 1,4-Phenylendiamin, und 4,4'-Diaminodiphenylmethan, 2,4'-Diaminodiphenylmethan, 2,2'-Diaminodiphenylmethan, ggf. allein oder in Mischungen der Isomeren;
- Addukthärter, insbesondere Umsetzungsprodukte von Epoxidverbindungen, insbesondere Glycidylether des Bisphenol A und F, mit überschüssigem Amin;
- Polyamidoaminhärter, insbesondere durch Kondensation von Mono- und Polycarbonsäuren mit Polyaminen erhaltene Polyamidoaminhärter, ganz insbesondere durch Kondensation von Dimerfettsäuren mit Polyalkylenpolyaminen;
- Mannichbasenhärter, insbesondere durch Umsetzung von ein- oder mehrwertigen Phenolen mit Aldehyden, insbesondere Formaldehyd, und Polyaminen, Mannichbasenhärter; und
- Mannichbasen, insbesondere auf Basis von Phenol und/oder Resorcin, Formaldehyd und m-Xylylendiamin sowie N-Aminoethylpiperazin und Abmischungen von N-Aminoethylpiperazin mit Nonylphenol und/oder Benzylalkohol, Phenalkamine, die in einer Mannichreaktion aus Cardanolen, Aldehyden und Aminen gewonnen werden.

Es können auch Mischungen der vorab genannten Di- oder Polyamine als Komponente d) eingesetzt werden.

Bevorzugte weitere Hilfs- und Zuschlagsstoffe e) können die in der Epoxychemie üblichen Verbindungen sein. Bevorzugte Hilfs- und Zuschlagsstoffe e) sind Pigmente, Lösemittel, Verlaufsmittel, Modifikatoren, wie z.B. Benzylalkohol oder Nonylphenol, Entgasungsmittel, Mattierungsmittel, Reaktiwerdünner, sowie herkömmliche Katalysatoren, wie Salizylsäure.

In einer bevorzugten Ausführungsform werden keine weiteren herkömmlichen Katalysatoren eingesetzt, d. h. die möglichen Hilfs- und Zuschlagsstoffe sind beschränkt auf Pigmente, Lösemittel, Verlaufsmittel, Modifikatoren, Entgasungsmittel, Mattierungsmittel und Reaktiwerdünner.

Die Zusammensetzung der Komponenten a) bis e) in der erfindungsgemäßen Zusammensetzung beträgt bevorzugt die folgenden Gewichtsprozentanteile, bezogen auf die Gesamtmasse der Zusammensetzung:
a) Epoxyharz 30 - 95 %
b) cyclisches Amin 1 - 50 %
c) Salz der starken Brönstedt-Säure 0,001 - 5 %, bevorzugt 0,1 - 3 %,
d) weiteres Amin 0 - 48 % und
e) weitere Hilfs- oder Zusatzstoffe 0 - 48 %.

Der Gewichtsprozentanteil der Amine b) bezogen auf die Gesamtmasse der Amine b) und d) beträgt mindestens 10 Gew.-%. Bevorzugt beträgt er mindestens 30 %, ganz besonders bevorzugt mindestens 50 % und noch bevorzugter mindestens 70 %.

Gegenstand der Erfindung ist weiterhin ein Verfahren zur Herstellung einer erfindungsgemäßen Zusammensetzung, bei dem mindestens ein Epoxyharz a), mindestens ein cyclisches Amin b) und mindestens ein Salz einer starken Säure c) miteinander vermischt wird.

Gegenstand der Erfindung ist weiterhin die Verwendung der erfindungsgemäßen Zusammensetzungen als Gießharz, Beschichtungsmasse, Komposit oder Klebstoff oder als Bestandteil davon.

### Experimenteller Teil:

### Beispiel 1)

Zum Nachweis der besonderen Reaktivität der beanspruchten Katalysatoren werden zunächst Modellversuche miteinander verglichen. Dazu gibt man jeweils 0,025 Mol (3,75 g) des 1,2-Epoxy-3-phenoxypropans in eine Mischung aus 22,68 g Toluol (Lösemittel) und 2,08 g Tetradecan (interner Standard). Dazu werden 0,025 Mol (2,13 g) Piperidin zugegeben und 0,06 g des jeweiligen Katalysators. Sofort nach der Mischung wird ein GC angefertigt und der Gehalt an 1,2-Epoxy-3-phenoxypropan mit dem Gehalt des Tetradecans verglichen. Nach 4 h bei Raumtemperatur wird mittels einer GC-Untersuchung der Restgehalt an 1,2-Epoxy-3-phenoxypropan (EP) ermittelt (kalibriert durch den internen Standard Tetradecan). Dabei ergeben sich folgende Resultate:

**Vergleich der Katalysatoren**

| | **Katalysator** | **% EP in der 0-Probe** | **% EP nach 4 Stunden bei RT** |
|---|---|---|---|
| 1* | Kein Katalysator | 97 | 93 |
| 2* | Dibutylzinndilaurat | 99 | 93 |
| 3* | Diazabicyclononan (DBN) | 97 | 95 |
| 4* | Diazabicycloundecan (DBU) | 96 | 93 |
| 5* | Diazabicyclooctan (DABCO) | 94 | 93 |
| 6* | Zinkacetylacetonat | 94 | 90 |
| 7* | Tetrabutylammoniumtribromid | 91 | 87 |
| 8* | Bismuthneodecanoat | 91 | 88 |
| 9* | Tita ntetra butylat | 95 | 94 |
| 10* | Salicylsäure | 93 | 90 |
| 11* | Phenol | 97 | 85 |
| 12 | Calciumnitrat | 93 | 36 |
| 13 | Magnesiumbromid | 91 | 28 |
| 14 | Indiumchlorid | 94 | 35 |
| 15 | Bismuthchlorid | 94 | 43 |
| 16 | Kupfertetrafluorborat | 93 | 33 |
| 17 | Calciumoxalat | 94 | 38 |
| 18 | Zirconium(IV)chlorid | 89 | 33 |
| 19 | Lithiumbromid | 95 | 34 |
| 20 | Magnesiumnitrat | 98 | 33 |
| 21 | Calciumbromid | 98 | 79 |

| | | | |
|---|---|---|---|
| * Nicht erfindungsgemäße Vergleichsversuche | | | |

### Beispiel 2a)*

100 Teile Homopiperazin (Aldrich) werden mit 66 Teilen Benzylalkohol und 380 Teilen Epikote 828 (Epoxyäquivalent 190, Hexion) innigst vermischt und sofort danach ein DSC angefertigt.

### Beispiel 2b)*

In 100 Teile Homopiperazin (Aldrich) und 66 Teilen Benzylalkohol werden 0,5 Teile Kalziumnitrat (50%ig in Ethanol, Aldrich) gelöst und diese Mischung wird innigst mit 380 Teilen Epikote 828 (Epoxyäquivalent 190, Hexion) vermischt und sofort danach ein DSC angefertigt.

### Beispiel 2c)*

In 100 Teile Isophorondiamin (Evonik Industries) und 66 Teilen Benzylalkohol werden 0,5 Teile Kalziumnitrat (50%ig in Ethanol, Aldrich) gelöst und diese Mischung wird innigst mit 445 Teilen Epikote 828 (Epoxyäquivalent 190, Hexion) vermischt und sofort danach ein DSC angefertigt.

*** Nicht erfindungsgemäße Vergleichsversuche**

| **Rezeptur-Nr.** | | | **2a*** | **2b** | **2c*** |
|---|---|---|---|---|---|
| | ***DSC-Analyse sofort*** | | | | |
| Exothermer Peak | | °c | 70 | 65 | 90 |
| **Onset** | | °c | **32** | **28** | **50** |
| Exothermer Wärmestrom | | J/g | 362 | 312 | 386 |
| **Tg max.** | | °c | 58 | 52 | 100 |

Bei dem erfindungsgemäßen Versuch liegt sowohl der exotherme Peak niedriger, als auch der Onset dieses exothermen Peaks. Die erfindungsgemäße reaktive Zusammensetzung ist also reaktiver als ohne Katalysator oder ohne Amine mit zwei cyclischen NH-Gruppen.

## Patentansprüche

1. Maximal 10 Gew.-% Alkylphenol enthaltende Zusammensetzung umfassend
a) mindestens ein Epoxyharz,
b) mindestens ein Amin mit mindestens zwei sekundären Aminogruppen, die beide Bestandteil eines organischen Ringsystems sind, und
c) mindestens ein Salz einer Brönstedt-Säure mit einem pKs-Wert kleiner oder gleich 2 mit einem Gegenion ausgewählt aus Metallionen, Metall-haltigen Ionen, Phosphoniumionen und Ammoniumionen,
d) Amine, die nicht mindestens zwei sekundäre Aminogruppen als Bestandteil eines organischen Ringsystems aufweisen, allein oder in Mischungen,
mit der Maßgabe, dass der Gewichtsprozentanteil der Amine b) bezogen auf die Gesamtmasse der Amine b) und d) mindestens 10 Gew.-% beträgt.

2. Zusammensetzung nach Anspruch 1,
**dadurch gekennzeichnet, dass**
das mindestens eine Epoxyharz ein Polyepoxid auf Basis von Bisphenol A-diglycidylether, Bisphenol F-diglycidylether, 4,4'-Methylen-bis[N,N-bis(2,3-epoxypropyl)anilin], Hexandioldiglycidylether, Butandioldiglycidylether, Trimethylolpropantriglycidylether, 1,2,3-Propantrioltriglycidylether, Pentaerythrit-tetraglycidylether und Hexahydrophthalsäurediglycidylester ist.

3. Zusammensetzung nach Anspruch 1 oder 2,
**dadurch gekennzeichnet, dass**
mindestens zwei der sekundären cyclischen Aminogruppen zu unterschiedlichen Cyclen gehören.

4. Zusammensetzung nach Anspruch 1 oder 2,
**dadurch gekennzeichnet, dass**
alle der sekundären cyclischen Aminogruppen zu demselben Cyclus gehören.

5. Zusammensetzung nach Anspruch 4,
**dadurch gekennzeichnet, dass**
das Amin die Formel (I) aufweist 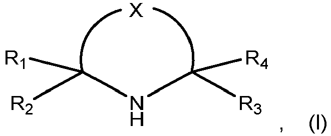 in der
- in der R¹ bis R⁴ für H oder organischen Rest steht, und
-
X = -(Y¹)ₘ-(A¹)ₙ-(Y²)ₒ-(A²)ₚ-(Y³)_{q}-(A³)ᵣ(Y⁴)ₛ, (II)
wobei unabhängig voneinander
o m, n, o, p, q, r und s = 0 oder 1,
∘ A¹, A², A³ = Alkylen- oder Alkenylenrest und
o Y¹, Y², Y³, Y⁴ = NR⁵, PR⁵, O oder S, mit R⁵ unabhängig voneinander = H oder organischer Rest,
o wobei jeweils zwei organische Reste ausgewählt aus R¹ bis R⁵ und ggf. anwesenden Resten der Alkylen- und/oder Alkenylenreste A¹, A², A³ auch einen oder mehrere weitere Ringe bilden können,
- mit der Maßgabe, dass mindestens einer der vorhandenen Reste ausgewählt aus Y¹, Y², Y³, Y⁴ gleich NR⁵ mit R⁵ = H ist.

6. Zusammensetzung nach Anspruch 5,
**dadurch gekennzeichnet, dass**
A¹, A² und A³ unabhängig voneinander die Formel (III) aufweisen
-(CR⁷R⁸)ₓ-(CR⁹=CR¹⁰)_{y}-(CR¹¹R¹²)_{z}- (III)
in der unabhängig von einander
- R⁷, R⁸, R⁹, R¹⁰, R¹¹ und R¹² = H oder organischer Rest und
- 1 ≤ x + y + z ≤ 7
ist.

7. Zusammensetzung nach Anspruch 5 oder 6,
**dadurch gekennzeichnet, dass**
X in Formel (II) eine Kettenlänge von 2 bis 15 Atomen aufweist.

8. Zusammensetzung nach einem der Ansprüche 5 bis 7,
**dadurch gekennzeichnet, dass**
X die Formel (IIa)
X = -(CR⁷R⁸)ₓ-(Y)ₒ-(CR¹¹R¹²)_{z}- (IIa)
mit
- x und z = 0, 1, 2, 3, 4, 5, 6 oder 7,
- o = 1,
- 2 ≤ x + o + z ≤ 15
- R⁷, R⁸, R¹¹, R¹² = H oder organischer Rest und
- Y = NH
aufweist.

9. Zusammensetzung nach einem der vorhergehenden Ansprüche,
**dadurch gekennzeichnet, dass**
das Amin b) ausgewählt wird aus der Gruppe bestehend aus sind 3,7-Diazabicyclo[4.3.0]nonan, 2,8-Diazabicyclo[4.3.0]nonan, 2-Phenyl-2-imidazolin, 3,8-Diazabicyclo[3.2.1]octan, 2,2'-Bisimidazolidine, 1H- Octahydro-imidazo[4,5-c]pyridin, 1,4,8-Triazaspiro[4.5]decan, 1,4-Diazaspiro[4.5]decan, Pyrazolidin, 2,2-Dimethylimidazolidin, 1,4,7-Triazacyclononan, Decahydro-2,6-dimethylpyrazino[2,3-b]pyrazin, Hexahydropyridazine, Decahydro-4a,8a-dimethylpyrazino[2,3-b]pyrazin, 4,4'-Methylenebis[piperidin], 2,2'-Methylenebis[piperidin], Tetradecahydro-4,7-phenanthrolin, 2,2'-Bipiperidin, 4,4'-Bipiperidin, Tetradecahydrophenazin, Decahydrochinoxalin, 1,5-Decahydronaphthyridin, Octahydro-1H-cyclopentapyrazin, 2,2'-Bipyrrolidin, Piperazin, 2-Methylpiperazin, 2,2-Dimethylpiperazin, 2,3-Dimethylpiperazin, 2-Ethylpiperazin, 2,5-Dimethylpiperazin, 2,6-Dimethylpiperazin, 2,6-Diazabicyclo[3.3.0]octan, 3,7-Diazabicyclo[3.3.0]octan, 2,3,5,6-Tetramethylpiperazin, 2,3,5-Trimethylpiperazin, 2,2'-Bipiperidin, 2-(2-Piperidinyl)-piperazin, 2,2'-Bimorpholin, Decahydro-2,6-naphthyridin, Decahydro-2,7-naphthyridin, Homopiperazin, 2-Methylhomopiperazin, 6-Methyl-1,4-diazepan, Bis[2-(piperazin-1-yl)ethyl]amine und 1,2-Dipiperazinoethane.

10. Zusammensetzung nach einem der vorhergehenden Ansprüche,
**dadurch gekennzeichnet, dass**
das Salz einer starken Brönstedt-Säure ein Erdalkalimetall-, Lithium-, Zirkonium-, Phosphonium- oder Ammoniumsalz ist.

11. Zusammensetzung nach einem der vorhergehenden Ansprüche,
**dadurch gekennzeichnet, dass** sie
e) weitere Hilfs- oder Zusatzstoffe aufweist.

12. Zusammensetzung nach Anspruch 1,
**dadurch gekennzeichnet, dass**
die Amine d) ausgewählt sind aus
- aliphatischen Aminen,
- Oxyalkylenpolyaminen
- Cycloaliphatischen Aminen,
- Aminen mit einer cyclischen Aminogruppe und mindestens einer nichtcyclischen primären oder sekundären Aminogruppe,
- Araliphatischen Aminen,
- Aromatischen Aminen
- Addukthärtern,
- Polyamidoaminhärtern
- Mannichbasenhärtern und
- Mannichbasen.

13. Zusammensetzung nach einem der vorhergehenden Ansprüche,
**dadurch gekennzeichnet, dass**
die Zusammensetzung die Komponenten a) bis e) in den folgenden Gewichtsprozentanteilen, bezogen auf die Gesamtmasse der Zusammensetzung aufweist:
a) Epoxyharz 30 - 95 %
b) cyclisches Amin 1 - 50 %
c) Salz der starken Brönstedt-Säure 0,001 - 5 %
d) weiteres Amin 0 - 48 % und
e) weitere Hilfs- oder Zusatzstoffe 0 - 48 %.

14. Verfahren zur Herstellung einer Zusammensetzung nach einem der der vorhergehenden Ansprüche 1 - 13,
**dadurch gekennzeichnet, dass**
mindestens ein Epoxyharz a), mindestens ein cyclisches Amin b) und mindestens Salz einer starken Brönstedt-Säure c) miteinander vermischt werden.

15. Verwendung einer Zusammensetzung nach einem der Ansprüche 1 -13 als Gießharz, Beschichtungsmasse, Komposit oder Klebstoff oder als Bestandteil davon.

## Claims

1. Composition containing not more than 10% by weight of alkylphenol and comprising
a) at least one epoxy resin,
b) at least one amine having at least two secondary amino groups that are both part of an organic ring system, and
c) at least one salt of a Brønsted acid having a pKₐ of not more than 2 with a counterion selected from metal ions, metal-containing ions, phosphonium ions and ammonium ions,
d) amines that do not have at least two secondary amino groups as part of an organic ring system, alone or in mixtures,
with the proviso that the percentage by weight of the amines b) based on the total mass of the amines b) and
d) is at least 10% by weight.

2. Composition according to Claim 1,
**characterized in that**
the at least one epoxy resin is a polyepoxide based on bisphenol A diglycidyl ether, bisphenol F diglycidyl ether, 4,4'-methylenebis[N,N-bis(2,3-epoxypropyl)aniline], hexanediol diglycidyl ether, butanediol diglycidyl ether, trimethylolpropane triglycidyl ether, propane-1,2,3-triol triglycidyl ether, pentaerythritol tetraglycidyl ether and diglycidyl hexahydrophthalate.

3. Composition according to Claim 1 or 2, **characterized in that**
at least two of the secondary cyclic amino groups belong to different cycles.

4. Composition according to Claim 1 or 2, **characterized in that**
all the secondary cyclic amino groups belong to the same cycle.

5. Composition according to Claim 4,
**characterized in that**
the amine has the formula (I) 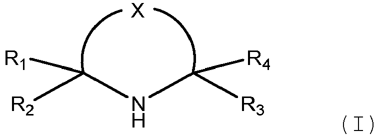 in which
- in which R¹ to R⁴ is H or an organic radical, and
-
X = -(Y¹)ₘ-(A¹)ₙ-(Y²)ₒ-(A²)ₚ-(Y³)_{q}-(A³)ᵣ(Y⁴)ₛ, (II)
where, independently of one another,
o m, n, o, p, q, r and s = 0 or 1,
∘ A¹, A², A³ = alkylene or alkenylene radical and
o Y¹, Y², Y³, Y⁴ = NR⁵, PR⁵, O or S, with R⁵ independently = H or organic radical,
o where any two organic radicals selected from R¹ to R⁵ and any radicals present in the alkylene and/or alkenylene radicals A¹, A², A³ may also form one or more further rings,
- with the proviso that at least one of the radicals selected from Y¹, Y², Y³, Y⁴ present is NR⁵ with R⁵ = H.

6. Composition according to Claim 5,
**characterized in that**
A¹, A² and A³ independently have the formula (III)
- (CR⁷R⁸)ₓ-(CR⁹=CR¹⁰)_{y}-(CR¹¹R¹²)_{z}- (III)
in which, independently of one another,
- R⁷, R⁸, R⁹, R¹⁰, R¹¹ and R¹² = H or organic radical and
- 1 ≤ x + y + z ≤ 7.

7. Composition according to Claim 5 or 6,
**characterized in that**
X in formula (II) has a chain length of 2 to 15 atoms.

8. Composition according to any of Claims 5 to 7, **characterized in that**
X has the formula (IIa)
X = -(CR⁷R⁸)ₓ-(Y)ₒ-(CR¹¹R¹²)_{z}- (IIa)
with
- x and z = 0, 1, 2, 3, 4, 5, 6 or 7,
- ο = 1,
- 2 ≤ x + o + z ≤ 15
- R⁷, R⁸, R¹¹, R¹² = H or organic radical and
- Y = NH.

9. Composition according to any of the preceding claims, **characterized in that**
the amine b) is selected from the group consisting of 3,7-diazabicyclo[4.3.0]nonane, 2,8-diazabicyclo-[4.3.0]nonane, 2-phenyl-2-imidazoline, 3,8-diazabicyclo[3.2.1]octane, 2,2'-bisimidazolidines, 1H-octahydroimidazo[4,5-c]pyridine, 1,4,8-triazaspiro[4.5]decane, 1,4-diazaspiro[4.5]decane, pyrazolidine, 2,2-dimethylimidazolidine, 1,4,7-triazacyclononane, decahydro-2,6-dimethylpyrazino-[2,3-b]pyrazine, hexahydropyridazines, decahydro-4a,8a-dimethylpyrazino[2,3-b]pyrazine, 4,4'-methylenebis[piperidine], 2,2'-methylenebis-[piperidine], tetradecahydro-4,7-phenanthroline, 2,2'-bipiperidine, 4,4'-bipiperidine, tetradecahydro-phenazine, decahydroquinoxaline, 1,5-decahydronaphthyridine, octahydro-1H-cyclopenta-pyrazine, 2,2'-bipyrrolidine, piperazine, 2-methylpiperazine, 2,2-dimethylpiperazine, 2,3-dimethylpiperazine, 2-ethylpiperazine, 2,5-dimethylpiperazine, 2,6-dimethylpiperazine, 2,6-diazabicyclo[3.3.0]octane, 3,7-diazabicyclo[3.3.0]-octane, 2,3,5,6-tetramethylpiperazine, 2,3,5-trimethylpiperazine, 2,2'-bipiperidine, 2-(2-piperidinyl)piperazine, 2,2'-bimorpholine, decahydro-2,6-naphthyridine, decahydro-2,7-naphthyridine, homopiperazine, 2-methylhomopiperazine, 6-methyl-1,4-diazepane, bis[2-(piperazin-1-yl)ethyl]amines and 1,2-dipiperazinoethanes.

10. Composition according to any of the preceding claims,
**characterized in that**
the salt of a strong Brønsted acid is an alkaline earth metal, lithium, zirconium, phosphonium or ammonium salt.

11. Composition according to any of the preceding claims,
**characterized in that** it includes
e) further auxiliaries or additives.

12. Composition according to Claim 1,
**characterized in that**
the amines d) are selected from
- aliphatic amines,
- oxyalkylenepolyamines
- cycloaliphatic amines,
- amines having a cyclic amino group and at least one acyclic primary or secondary amino group,
- araliphatic amines,
- aromatic amines
- adduct hardeners,
- polyamidoamine hardeners
- Mannich base hardeners and
- Mannich bases.

13. Composition according to any of the preceding claims,
**characterized in that**
the composition includes components a) to e) in the following percentages by weight, based on the total mass of the composition:
a) epoxy resin 30-95%
b) cyclic amine 1-50%
c) salt of the strong Brønsted acid 0.001-5%
d) further amine 0-48% and
e) further auxiliaries or additives 0-48%.

14. Process for producing a composition according to any of the preceding Claims 1-13,
**characterized in that**
at least one epoxy resin a), at least one cyclic amine b) and at least one salt of a strong Brønsted acid c) are mixed with one another.

15. Use of a composition according to any of Claims 1-13 as casting resin, coating composition, composite or adhesive or as a constituent thereof.

## Revendications

1. Composition contenant au maximum 10 % en poids d'un alkylphénol, comprenant
a) au moins une résine époxyde,
b) au moins une amine ayant au moins deux groupes amino secondaires, qui tous les deux sont un constituant d'un système cyclique organique, et
c) au moins un sel d'un acide de Brönstedt ayant un pKₛ inférieur ou égal à 2 avec un contre-ion choisi parmi les ions métalliques, les ions contenant un métal, les ions phosphonium et les ions ammonium,
d) des amines, qui ne comportent pas au moins deux groupes amino secondaires en tant que constituant d'un système cyclique organique, seuls ou en mélange,
à la condition que le pourcentage en poids des amines b), par rapport à la masse totale des amines b) et d), soit d'au moins 10 % en poids.

2. Composition selon la revendication 1,
**caractérisée en ce que**
l'au moins une résine époxy est un polyépoxyde à base de l'éther diglycidylique du bisphénol A, de l'éther diglycidylique du bisphénol F, de la 4,4'-méthylène-bis[N,N-bis(2,3-époxypropyl)aniline], de l'éther diglycidylique de l'hexanediol, de l'éther diglycidylique du butanediol, de l'éther triglycidylique du triméthylolpropane, de l'éther triglycidylique du 1,2,3-propanetriol, de l'éther tétraglycidylique du pentaérythritol et de l'ester diglycidylique de l'acide hexahydrophtalique.

3. Composition selon la revendication 1 ou 2, **caractérisée en ce que**
au moins deux des groupes amino cycliques secondaires appartiennent à des cycles différents.

4. Composition selon la revendication 1 ou 2, **caractérisée en ce que**
tous les groupes amino cycliques secondaires appartiennent au même cycle.

5. Composition selon la revendication 4,
**caractérisée en ce que**
l'amine a la formule (I) 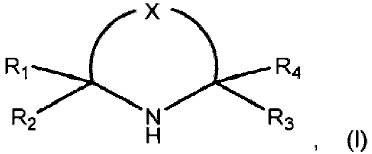 dans laquelle
- R¹ à R⁴ représentent H ou un radical organique, et
- X = -(Y¹)ₘ-(A¹)ₙ-(Y²)ₒ-(A²)ₚ-(Y³)_{q}-(A³)ᵣ-(Y⁴)ₛ, (II) dans laquelle, indépendamment les uns des autres
o m, n, o, p, q, r et s = 0 ou 1,
∘ A¹, A², A³ = radical alkylène ou alcénylène et
∘ Y¹, Y², Y³, Y⁴ = NR⁵, PR⁵, O ou S, R⁵ indépendamment des autres = H ou un radical organique,
o où deux radicaux organiques sont chacun choisis parmi R¹ à R⁵, et les radicaux éventuellement présents des radicaux alkylène et/ou alcénylène A¹, A², A³ peuvent aussi former un ou plusieurs cycles supplémentaires,
- à la condition qu'au moins l'un des radicaux présents soit choisi parmi Y¹, Y², Y³, Y⁴ égaux à NR⁵ avec R⁵ = H.

6. Composition selon la revendication 5,
**caractérisée en ce que**
A¹, A² et A³ ont indépendamment les uns des autres la formule (III)
-(CR⁷R⁸)ₓ-(CR⁹=CR¹⁰)_{y}-(CR¹¹R¹²)_{z}- (III)
dans laquelle, indépendamment les uns des autres
- R⁷, R⁸, R⁹, R¹⁰, R¹¹ et R¹² = H ou un radical organique et
- 1 ≤ x + y + z ≤ 7.

7. Composition selon la revendication 5 ou 6, **caractérisée en ce que**
X dans la formule (II) a une longueur de chaîne de 2 à 15 atomes.

8. Composition selon l'une des revendications 5 à 7, **caractérisée en ce que**
X a la formule (IIa)
X = -(CR⁷R⁸)ₓ-(Y)ₒ-(CR¹¹R¹²)_{z}- (IIa)
dans laquelle
- x et z = 0, 1, 2, 3, 4, 5, 6 ou 7,
- ο = 1,
- 2 ≤ x + o + z ≤ 15
- R⁷, R⁸, R¹¹, R¹² = H ou un radical organique et
- Y = NH.

9. Composition selon l'une des revendications précédentes,
**caractérisée en ce que**
l'amine b) est choisie dans le groupe consistant en le 3,7-diazabicyclo[4.3.0]nonane, le 2,8-diazabicyclo[4.3.0]nonane, la 2-phényl-2-imidazoline, le 3,8-diazabicyclo[3.2.1]octane, la 2,2'-bisimidazolidine, la 1H-octahydro-imidazo[4,5-c]pyridine, le 1,4,8-triazaspiro[4.5]décane, le 1,4-diazaspiro[4.5]décane, la pyrazolidine, la 2,2-diméthylimidazolidine, le 1,4,7-triazacyclononane, la décahydro-2,6-diméthylpyrazino[2,3-b]pyrazine, l'hexahydropyridazine, la décahydro-4a,8a-diméthylpyrazino[2,3-b]pyrazine, la 4,4'-méthylènebis[pipéridine], la 2,2'-méthylènebis[pipéridine], la tétradécahydro-4,7-phénanthroline, la 2,2'-bipipéridine, la 4,4'-bipipéridine, la tétradécahydrophénazine, la décahydroquinoxaline, la 1,5-décahydronaphtyridine, l'octahydro-1H-cyclopentapyrazine, la 2,2'-bipyrrolidine, la pipérazine, la 2-méthylpipérazine, la 2,2-diméthylpipérazine, la 2,3-diméthylpipérazine, la 2-éthylpipérazine, la 2,5-diméthylpipérazine, la 2,6-diméthylpipérazine, le 2,6-diazabicyclo[3.3.0]octane, le 3,7-diazabicyclo[3.3.0]octane, la 2,3,5,6-tétraméthylpipérazine, la 2,3,5-triméthylpipérazine, la 2,2'-bipipéridine, la 2-(2-pipéridinyl)-pipérazine, la 2,2'-bimorpholine, la décahydro-2,6-naphtyridine, la décahydro-2,7-naphtyridine, l'homopipérazine, la 2-méthylhomopipérazine, le 6-méthyl-1,4-diazépane, la bis[2-(pipérazin-1-yl)éthyl]amine et le 1,2-dipipérazinoéthane.

10. Composition selon l'une des revendications précédentes,
**caractérisée en ce que**
le sel d'un acide fort de Brönstedt est un sel d'un métal alcalino-terreux, de lithium, de zirconium, de phosphonium ou d'ammonium.

11. Composition selon l'une des revendications précédentes,
**caractérisée en ce qu'**elle comprend
e) des adjuvants ou additifs supplémentaires.

12. Composition selon la revendication 1,
**caractérisée en ce que**
les amines d) sont choisies parmi
- les amines aliphatiques,
- les oxyalkylènepolyamines,
- les amines cycloaliphatiques,
- les amines ayant un groupe amino cyclique et au moins un groupe amino primaire ou secondaire non cyclique,
- les amines araliphatiques,
- les amines aromatiques,
- les durcisseurs adduits,
- les durcisseurs polyamidoamines
- les durcisseurs bases de Mannich et
- les bases de Mannich.

13. Composition selon l'une des revendications précédentes,
**caractérisée en ce que**
la composition comprend les composants a) à e) en les pourcentages en poids suivants, par rapport à la masse totale de la composition :
a) résine époxyde 30 à 95 %
b) amine cyclique 1 à 50 %
c) sel de l'acide fort de Brönstedt 0,001 à 5 %
d) amine supplémentaire 0 à 48 % et
e) adjuvants ou additifs supplémentaires 0 à 48 %.

14. Procédé de fabrication d'une composition selon l'une des revendications précédentes 1 à 13, **caractérisé en ce que**
on mélange les uns aux autres au moins une résine époxyde a), au moins une amine cyclique b) et au moins un sel d'un acide fort de Brönstedt c).

15. Utilisation d'une composition selon l'une des revendications 1 à 13 en tant que résine de coulée, masse de revêtement, composite ou adhésif ou en tant que constituant de ceux-ci.
